(19) Europäisches Patentamt / European Patent Office / Office européen des brevets

(11) **EP 2 026 519 A1**

(12) **EUROPÄISCHE PATENTANMELDUNG**

(43) Veröffentlichungstag:
**18.02.2009 Patentblatt 2009/08**

(51) Int Cl.:
*H04L 25/03* (2006.01)  *H04L 1/06* (2006.01)

(21) Anmeldenummer: **07016196.3**

(22) Anmeldetag: **17.08.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(71) Anmelder: **Infineon Technologies AG**
**85579 Neubiberg (DE)**

(72) Erfinder:
• **Jung, Peter**
 **47051 Duisburg (DE)**

• **Bruck, Guido Horst**
 **46562 Voerde (DE)**
• **Scholand, Tobias**
 **45468 Mülheim a.d. Ruhr (DE)**
• **Spiegel, Christoph**
 **46045 Oberhausen (DE)**

(74) Vertreter: **Patentanwälte Lambsdorff & Lange**
**Dingolfinger Strasse 6**
**81673 München (DE)**

(54) **Vorverzerrung für eine Raum-Zeit-Block-Kodierung**

(57) Bei einem Verfahren zur Aussendung von Kommunikationssignalen wird eine Raum-Zeit-Block-Codierung durchgeführt, indem ein Datenstrom komplexwertiger Datensymbole in eine Anzahl $K_T > 2$ Teildatenströme von jeweils $n > 2$ Datensymbole unterteilt wird, aus den Datensymbolen der Teildatenströme eine $n \times K_T$-Matrix $C_{K_T}$ gebildet wird, eine senderseitige Vorverzerrung durchgeführt wird, indem aus der Matrix $C_{K_T}$ eine Matrix D gebildet wird, und die Datensymbole entsprechend ihrer Anordnung in der Matrix D durch $K_T$ Sendeantennen ausgesandt werden.

FIG 1

EP 2 026 519 A1

**Beschreibung**

Die vorliegende Erfindung betrifft ein Verfahren zur Aussendung von Kommunikationssignalen, ein Verfahren zum Empfang von Kommunikationssignalen, eine Vorrichtung zur Aussendung von Kommunikationssignalen und eine Vorrichtung zum Empfang von Kommunikationssignalen.

Eine wichtige Aufgabe zukünftiger Mobilfunksysteme ist die Bereitstellung von Diensten mit hohen Datenraten. In den heutigen digitalen zellularen Mobilfunknetzen der zweiten Generation, beispielsweise basierend auf dem GSM-Standard, oder der dritten Generation, beispielsweise basierend auf dem UMTS-Standard, bieten die Netzbetreiber ihren Kunden eine Vielzahl von Diensten an. Neben den Basisdiensten wie Sprachtelefonie, SMS (Short Message Service) und MMS (Multimedia Messaging Service) werden auch Videodienste und IP-(Internet Protocol) basierte Paketdatendienste angeboten.

Im Hinblick auf den Erfolg von DSL im Festnetzbereich geht der Trend im Mobilfunk ebenfalls hin zu hochratigen, für IP-Anwendungen (beispielsweise VoIP) optimierten Mobilfunksystemen. Die aktuelle Erweiterung von UMTS mit der Bezeichnung HSPA (High Speed Packet Access), auch als 3.5G-System bezeichnet, erlaubt maximale Netto-Übertragungsgeschwindigkeiten von bis zu 14 Mbps im Down-Link, Basisstation zu mobilem Endgerät) und bis zu 2 Mbps im Up-Link, mobiles Endgerät zu Basisstation. Um die Wettbewerbsfähigkeit des UMTS-Systems auch in Zukunft sicherzustellen, wird derzeit an der Weiterentwicklung von UMTS zu einem für IP-Paketdatenübertragung optimierten Mobilfunksystem durch Verbesserung der Systemkapazität und spektralen Effizienz gearbeitet. Das Ziel ist es, die maximalen Netto-Übertragungsgeschwindigkeiten zukünftig signifikant zu erhöhen, insbesondere bis zu 100 Mbps in Down-Link und 50 Mbps in Up-Link.

Es wird erwartet, dass zumindest in einer Übertragungsrichtung des Kommunikationssystems eine OFDM-basierte Signalübertragung (Orthogonal Frequency Division Multiplexing) genutzt werden soll. OFDM ist ein Mehrträgerverfahren, bei welchem durch eine Blockmodulation ein Block mit einer Anzahl von Datensymbolen parallel auf einer entsprechenden Anzahl von Unterträgern übertragen wird. Die Gesamtheit aller Unterträger bildet für die Dauer eines Datenblocks ein sogenanntes OFDM-Symbol.

Um die Anforderungen hinsichtlich der Datenrate zu erfüllen, ist jedoch auch eine bessere Auslastung der begrenzten Funkressourcen notwendig, als es in gegenwärtigen Mobilfunknetzen der Fall ist. In dieser Hinsicht bieten Systeme mit mehreren Antennen sowohl am Sender als auch am Empfänger die Möglichkeit einer Steigerung der spektralen Effizienz durch die Nutzung räumlicher Signaleigenschaften. Diese Entwicklungen werden unter dem Begriff Sendediversität zusammengefasst. Daher wird gegenwärtig der Einsatz sogenannter MIMO-Systeme (MIMO = Multiple-Input-Multiple-Output) in den Funknetzen der dritten Generation und in künftigen WLAN-Standards (WLAN = Wireless Local Area Netzwork = drahtloses, lokales Netz) diskutiert.

Ein wichtiges Verfahren zur Verbesserung der Empfangsbedingungen und somit einer möglichen Steigerung der Datenrate einer Kommunikationsverbindung stellen sogenannte Space-Time-Codes (STC) dar. Ein Ziel eines diese Codes nutzenden Verfahrens ist die Verbesserung der Kanaleigenschaften durch die gezielte Ausnutzung von räumlicher Diversität durch den Einsatz mehrerer Sendeantennen und gegebenenfalls mehrerer Empfangsantennen. Von besonderem Interesse ist dabei der Einsatz von Space-Time-Codes beispielsweise im Down-Link eines Mobilfunksystems, da sich ein erhöhter Implementierungs-Aufwand nur auf die Basisstationen erstreckt und damit eine höhere Kapazität für den Down-Link des zellularen Netzes erreicht werden kann und gleichzeitig der Implementierungs-Aufwand der Empfänger gering gehalten werden kann.

Als eine Möglichkeit von Space-Time-Codes sind die Space-Time-Block-Codes, im Folgenden auch als Raum-Zeit-Block-Codierung bezeichnet, beispielsweise in der Publikation "A Simple Transmit Diversity Technique for Wireless Communications" in IEEE Journal on Selected Areas in Communication, 16(8), Seiten 1451 - 1458 (1988) von S. M. Alamouti beschrieben worden. Bei der Raum-Zeit-Block-Codierung wird ein Signal von einer ersten Sendeantenne gesendet und von weiteren Sendeantennen werden verzögerte Varianten des von der ersten Sendeantenne gesendeten Signals ausgesendet. Bei dem Permutationsschema wird das modulierte Signal von einer ersten Sendeantenne gesendet und Permutation des modulierten Signals werden von weiteren Sendeantennen gesendet. Folglich kann das von den Sendeantennen gesendete Signal aus einer Matrix abgeleitet werden, die aus Datenworten in der Form des modulierten Signals und von Permutationen des modulierten Signals besteht. Durch die Raum-Zeit-Codierung wird ein Signal in mehrere Datenworte codiert und jedes Datenwort wird von einer unterschiedlichen Sendeantenne gesendet. Während des Sendens werden die Datenworte durch aufeinanderfolgendes Senden der Datensymbole jedes Datenworts bei einem Einträger-Verfahren über eine einzige Trägerfrequenz im Zeitbereich gespreizt.

In der Matrix eines STBC sind üblicherweise entlang einer Achse die Sendeantennen und entlang der anderen Achse die Zeitpunkte oder Zeitschlitze aufgetragen. Wenn ein STBC-Datenblock T Zeitschlitze aufweist und k Datensymbole codiert, wird eine Code-Rate r definiert als $r = k/T$. Die Raum-Zeit-Block-Codierung wurde ursprünglich für orthogonale STBCs eingeführt, bei denen die Matrix derart ist, dass beliebige zwei Antennenvektoren der Matrix zueinander orthogonal sind. Die oben genannte Publikation von Alamouti beschreibt einen orthogonalen STBC für zwei Sende- und Empfangsantennen mit der Code-Rate 1. Im Falle von mehr als zwei Sende- und Empfangsantennen sind nur solche orthogonalen STBCs bekannt, bei denen die Code-Rate kleiner als 1 ist. Solche STBCs nutzen zwar das gesamte Diversitätspotential des Übertragungskanals aus, ermöglichen jedoch wegen der Code-Rate kleiner als 1 nicht den maximalen Durchsatz. Neben den orthogonalen STBCs sind auch quasi-orthogonale STBCs bekannt, bei denen nur bei einem Teil der Paare von Antennenvektoren die entsprechenden Vektoren zueinander orthogonal sind. Es ist jedoch bisher nicht bekannt, wie mit einem quasi-orthogonalen STBC bei weniger als vier Sende- und Empfangsantennen eine Übertragung mit einer Code-Rate gleich 1 erreicht werden kann.

Eine auf einem OFDM-Verfahren basierende Weiterentwicklung betrifft eine Kombination von OFDM und MIMO, d.h. Aussendung und Empfang über mehrere Pfade unter Nutzung jeweils mehrerer Sende- und Empfangsantennen an den miteinander kommunizierenden Stationen. Durch die Kombination von OFDM mit MIMO, im Folgenden auch als MIMO-OFDM bezeichnet, kann vorteilhaft die Komplexität der Raum-Zeit-Signalverarbeitung gesenkt werden.

Die Erfindung wird nachfolgend in beispielhafter Weise unter Bezugnahme auf die Zeichnungen näher erläutert. In diesen zeigen:

Fig. 1    eine schematische Blockdarstellung einer Ausfüh- rungsform einer Vorrichtung zur Aussendung von Kommunikationssignalen;

Fig. 2    eine schematische Blockdarstellung einer Ausfüh- rungsform einer Vorrichtung zum Empfang von Kommunikationssignalen; und

Fig. 3    ein Ausführungsbeispiel für eine STBC-Blockmatrix für die Durchführung des erfindungsgemäßen Verfah- rens.

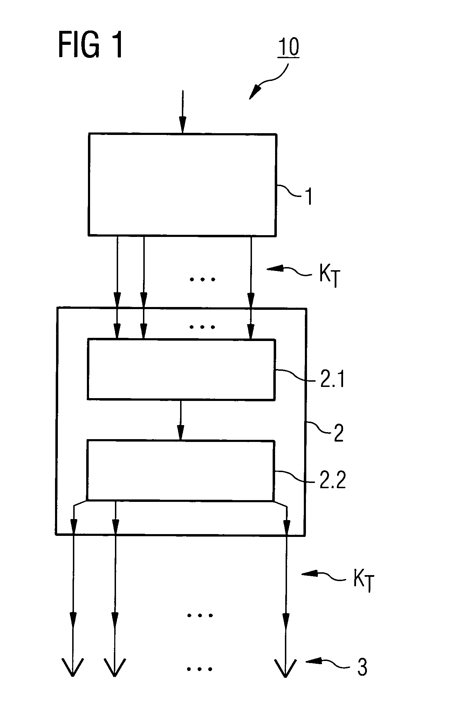

In der Fig. 1 ist ein Ausführungsbeispiel für eine Vorrichtung zur Aussendung von Kommunikationssignalen in einer Blockform schematisch dargestellt. Die Sendevorrichtung 10 weist als erstes eine Unterteilungseinheit 1 auf. Ein Datenstrom von in der Zeitdomäne vorliegenden komplexwertigen Datensymbolen wird der Unterteilungseinheit 1 an einem Eingang zugeführt. Die Unterteilungseinheit 1 dient dazu, den Datenstrom komplexwertiger Datensymbole in eine Anzahl $K_T$ Teildatenströme von Datensymbolen zu unterteilen, wobei $K_T > 2$ ist und die Teildatenströme jeweils eine Anzahl n Datensymbole enthalten und n > 2 ist. Die Unterteilungseinheit 1 kann beispielsweise durch einen Seriell-/Parallel-Wandler gegeben sein, durch den die $K_T$ Teildatenströme an $K_T$ Ausgängen des Seriell-/Parallel-Wandlers ausgegeben werden können. Die Sendevorrichtung 10 weist des Weiteren einen Raum-Zeit-Block-(STBC-)Codierer 2 auf. Die von der Unterteilungseinheit 1 ausgegebenen $K_T$ Teildatenströme werden dem STBC-Codierer zugeführt. Der STBC-Codierer 2 weist einen Matrix-Bildner 2.1 und eine Vorverzerrer-Einheit 2.2 auf. Die $K_T$ Teildatenströme werden dem Matrix-Bildner 2.1 zugeführt. In dem Matrix-Bildner 2.1 wird eine $n \times K_T$-Matrix $C_{K_T}$ aus den Datensymbolen der Teildatenströme gebildet. Die Matrix $C_{K_T}$ wird von dem Matrix-Bildner 2.1 an einem Ausgang ausgegeben und der Vorverzerrer-Einheit 2.2 an einem Eingang zugeführt. In der Vorverzerrer-Einheit 2.2 wird aus der Matrix $C_{K_T}$ eine neue Matrix $\underline{D}$ gebildet. Diese Vorverzerrung dient dazu, eine möglichst einfache und aufwandsgünstige Implementierung einer Empfangsvorrichtung zu ermöglichen, wie weiter unten noch erläutert werden wird.

Die Sendevorrichtung 10 weist des Weiteren eine Anzahl $K_T$ Sendeantennen 3 für die Aussendung der Datensymbole auf. Die Eingänge der $K_T$ Sendeantennen 3 sind mit Ausgängen der Vorverzerrer-Einheit 2.2 und entsprechenden Ausgängen des STBC-Codierers 2 verbunden, sodass die auszusendenden Datensymbole entsprechend ihrer in der Vorverzerrer-Einheit 2.2 gebildeten Matrix $\underline{D}$ auf die $K_T$ Sendeantennen 3 der Sendevorrichtung 10 verteilt werden können.

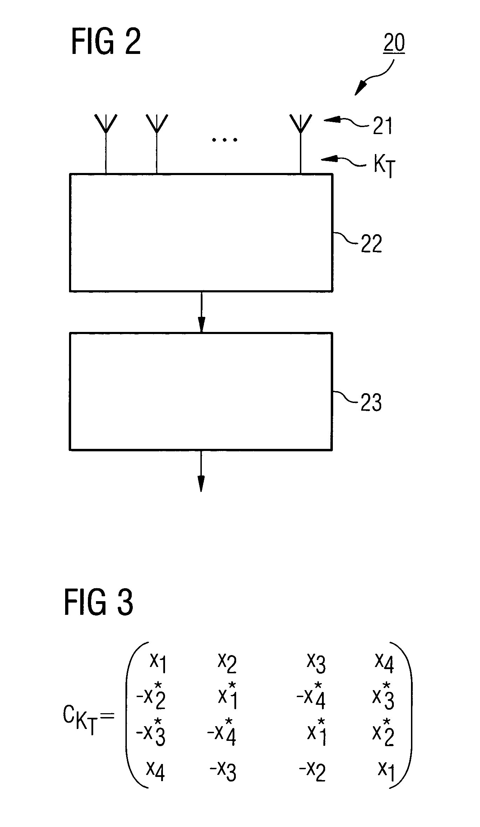

In der Fig. 2 ist ein Ausführungsbeispiel für eine Vorrichtung zum Empfang von Kommunikationssignalen, welche von einer Vorrichtung gemäß dem Ausführungsbeispiel der Fig. 1 ausgesandt wurden, schematisch in einer Blockform dargestellt. Die Empfangsvorrichtung 20 weist eine Anzahl $K_T$ Empfangsantennen 21 auf. Deren Ausgänge sind mit entsprechenden Eingängen einer Abtasteinrichtung 22 der Empfangsvorrichtung 20 verbunden. In der Abtasteinrichtung 22 werden Empfangsabtastwerte der von den Empfangsantennen 21 empfangenen Kommunikationssignalen erzeugt. Die erzeugten Empfangsabtastwerte werden einem Ausgang der Abtasteinrichtung 22 zugeführt, welcher mit einem Eingang eines Raum-Zeit-Block-(STBC-)Decodierers 23 verbunden ist. Der STBC-Decodierer 23 weist einen Ausgang zur Ausgabe der decodierten Datensignale aus.

Die Matrix $C_{K_T}$ kann beispielsweise durch die Matrix eines orthogonalen oder quasi-orthogonalen STBC für die $K_T$ Sende- bzw. Empfangsantennen gebildet sein. Um zu ermöglichen, dass der Empfänger auf einfache Weise implementiert werden kann, kann die Vorverzerrung durch eine orthogonale Vorverzerrung gegeben sein. Insbesondere kann die Vorverzerrung derart gegeben sein, dass die aus der quasi-orthogonalen Matrix $C_{K_T}$ in folgender Weise gebildet wird:

$$\underline{\mathbf{D}} = \left(\underline{C}_{K_T}^T \underline{C}_{K_T}\right)^{-1} \underline{C}_{K_T}^T \tag{1}$$

bzw.

$$\underline{\mathbf{D}} = \underline{C}_{K_T}^T \left(\underline{C}_{K_T} \underline{C}_{K_T}^T\right)^{-1} \tag{2}$$

In diesem Fall muss in der Empfangsvorrichtung 20 der Fig. 2 lediglich in dem STBC-Decodierer 23 die Matrix $C_{K_T}$ eingesetzt werden, d.h. es muss die Matrix $C_{K_T}$ mit den von der Abtasteinrichtung 22 gelieferten Empfangsabtastwerten 22 multipliziert werden. Es gilt nämlich

$$\underline{C}_{K_T} \cdot \left(\underline{C}_{K_T}^T \underline{C}_{K_T}\right)^{-1} \underline{C}_{K_T}^T = \underline{C}_{K_T} \cdot \underline{C}_{K_T}^{-1} \left(\underline{C}_{K_T}^T\right)^{-1} \underline{C}_{K_T}^T = I \tag{3}$$

beziehungsweise

$$\underline{C}_{K_T} \cdot \underline{C}_{K_T}^T \left(\underline{C}_{K_T} \underline{C}_{K_T}^T\right)^{-1} = I \, , \tag{4}$$

wobei $I$ die $K_T \times K_T$-Einheitsmatrix ist. Die Empfangsvorrichtung 20 bildet somit zur Decodierung einfache Linear-Kombinationen der Empfangsabtastwerte. An jeder Empfangsantenne 21 der Empfangsvorrichtung 20 liegen Sendesignale von jeder Sendeantenne 3 der Sendevorrichtung 10 der Fig. 1 vor, die in der beschriebenen Weise orthogonal vorverzerrt sind. Da sich durch die Matrix-Multiplikation gemäß obiger Gleichung (4) die Einheitsmatrix ergibt, werden lediglich Linear-Kombinationen der Empfangsabtastwerte gebildet. Die Matrix-Multiplikation gemäß obiger Gleichung (4) kann beispielsweise durch eine lineare Filterung mit einem geeignet gewählten Filter realisiert werden, deren Filtereigenschaften bzw. Filterkoeffizienten aus den Elementen der $C_{K_T}$-Matrix entnommen werden können.

Die Anzahl $K_T$ der Sende- und Empfangsantennen beträgt mindestens 3. Bei dem vorstehend beschriebenen Ausführungsbeispiel der Verwendung einer quasi-orthogonalen Matrix $C_{K_T}$, also quasi-orthogonalen linearen Raum-Zeit-Block-Codes und der Umwandlung der Matrix $C_{K_T}$ in die Matrix $\underline{\mathbf{D}}$ gemäß den Gleichungen (1) und (2) kann bei der Übertragung der Kommunikationssignale eine Code-Rate 1 erzielt werden und somit ein maximaler Durchsatz erreicht werden. Die Linearität der STBCs erlaubt günstige Implementierungen der Sendevorrichtung und der Empfangsvorrichtungen. Die sendeseitige Vorverzerrung, insbesondere die Vorverzerrung durch Umwandlung der Matrix $C_{K_T}$ in die Matrix $\underline{\mathbf{D}}$ erlaubt eine besonders aufwandsgünstige Realisierung der Empfangsvorrichtung, da in dieser durch Multiplikation der Empfangsabtastwerte mit der Matrix $C_{K_T}$ lediglich einfache Linear-Kombinationen gebildet werden müssen. Dies ist vor allem für den Down-Link interessant, da einer etwas aufwändigeren Basisstation einfache mobile Empfangsvorrichtungen gegenüberstehen.

Die in der Fig. 1 dargestellte Vorrichtung zur Aussendung von Kommunikationssignalen kann als ein Ausführungsbeispiel für eine Hardware-Implementierung des Verfahrens zur Aussendung von Kommunikationssignalen angesehen werden. Ebenso kann die in der Fig. 2 dargestellte Vorrichtung zum Empfang der Kommunikationssignale als eine Hardware-Implementierung des Verfahrens zum Empfangen der Kommunikationssignale angesehen werden. Die hier dargestellten Verfahren zur Aussendung und zum Empfangen von Kommunikationssignalen können jedoch auch jeweils als ein Computerprogrammprodukt, welches Programm-Codeabschnitte zum Durchführen des jeweiligen Verfahrens umfasst, implementiert werden. Ein solches Computerprogrammprodukt kann auf einem Aufzeichnungsträger gespeichert sein und im Bedarfsfall zur Ausführung in einen Mikrocontroller oder DSP geladen werden.

Das Verfahren zur Aussendung von Kommunikationssignalen kann sowohl bei einem Einträger-Verfahren als auch bei einem Mehrträger-Verfahren, beispielsweise einem OFDM-Verfahren, durchgeführt werden. Bei dem OFDM-Verfahren erhält man durch eine spektrale Codierung aus einem anfänglichen kontinuierlichen Datenstrom das zu jedem OFDM-Symbol zugehörige diskrete komplexwertige Spektrum, welches in der Regel im Hinblick auf die weitere Verarbeitung mit digitalen Schaltungskomponenten getrennt nach Real- und Imaginärteil vorliegt. Durch eine inverse diskrete Fourier-Transformation des Spektrums lassen sich die ebenfalls komplexwertigen Abtastwerte des OFDM-Symbols berechnen. Bei der inversen diskreten Fourier-Transformation können beispielsweise M zeitdiskrete Abtastwerte erzeugt werden. Diese werden dann als Datenstrom der Unterteilungseinheit 1 der Sendevorrichtung der Fig. 1 zugeführt. Die Gesamtheit aller Unterträger bildet für die Dauer eines Datenblocks das OFDM-Symbol. Letztlich kann jeder Unterträger von allen anderen Unterträgern unabhängig behandelt werden. Dies bedeutet auch, dass jeder Unterträger seine eigene $C_{K_T}$-Matrix haben kann, allerdings nicht notwendigerweise haben muss.

Das Verfahren ist somit auch in Verbindung mit einem Einträger-Verfahren anwendbar. Ein anfänglicher Datenstrom wird zunächst auf in der Regel komplexwertige Datensymbole abgebildet, welche beispielsweise 64-QAM-Datensymbole oder auch 8-PSK-Datensymbole sein können, wie sie in W-LAN, UMTS und EDGE verwendet werden. Diese Datensymbole werden zu Blöcken zusammengefasst, wobei jeder Block M Datensymbole enthalten kann. Interpretiert man dann einen solchen Block als Datenvektor d mit M in einer Spalte angeordneten Elementen und nimmt weiterhin an, dass die Daten parallel auf benachbarten, schmalbandigen Unterträgern gesendet werden sollen, so wird dementsprechend ein Signal in der Zeitdomäne durch die inverse diskrete Fourier-Transformation erzeugt. Die inverse diskrete Fourier-Transformation wird dann durch eine quadratische, unitäre M x M-Matrix L dargestellt. Das zeitdiskrete Ausgangssignal b = L · d der inversen diskreten Fourier-Transformation hat M Abtastwerte $b_1$, $b_2$, ..., $b_M$. Beispielsweise liegen $K_T$ = 4 Antennenelemente vor und M = 256. Man teilt nun den Vektor b in $K_T$ = 4 gleich lange Vektoren $b^{(1)}$, $b^{(2)}$, $b^{(3)}$ und $b^{(K_T)}$ ein. Auf die jeweils n-ten Elemente dieser Vektoren wird dann eine der Matrizen aus den obigen Gleichungen (1) oder (2) angewendet.

Im Falle einer Einzelträger-spezifischen Betrachtung würde nicht die Matrix L auf den Vektor d zuerst angewendet und dann eine der Matrizen der Gleichungen (1) oder (2). Stattdessen würde eine der Matrizen aus den Gleichungen (1) oder (2) direkt auf den Datenstrom angewendet werden, und zwar so, dass sich Unterträger-spezifische einzelne STBC-Matrizen realisieren ließen.

In der Fig. 3 ist ein Ausführungsbeispiel für eine quasi-orthogonale Matrix $C_{K_T}$ dargestellt. Diese Matrix $C_{K_T}$ betrifft den Fall, dass vier Antennenelemente vorgesehen sind. Die Matrix ist quasi-orthogonal und zeichnet sich somit dadurch aus, dass nur einzelne Paare von Spaltenvektoren zueinander orthogonal sind, andere wiederum nicht. Eine derartige Matrix kann als STBC-Matrix für ein Verfahren zur Aussendung von Kommunikationssignalen eingesetzt werden.

**Patentansprüche**

1. Verfahren zur Aussendung von Kommunikationssignalen, bei welchem
   eine Raum-Zeit-Block-Codierung durchgeführt wird, indem ein Datenstrom komplexwertiger Datensymbole in eine Anzahl $K_T$ > 2 Teildatenströme von jeweils n > 2 Datensymbolen unterteilt wird,
   aus den Datensymbolen der Teildatenströme eine n × $K_T$-Matrix $C_{K_T}$ gebildet wird,
   eine senderseitige Vorverzerrung durchgeführt wird, indem aus der Matrix $C_{K_T}$ eine Matrix D gebildet wird, und die Datensymbole entsprechend ihrer Anordnung in der Matrix D durch $K_T$ Sendeantennen ausgesandt werden.

2. Verfahren nach Anspruch 1, bei welchem
   aus der Matrix $C_{K_T}$ die Matrix D gemäß

$$D \;=\; \left(\underline{C}_{K_T}^T \, \underline{C}_{K_T}\right)^{-1} \underline{C}_{K_T}^T$$

oder

$$D \;=\; \underline{C}_{K_T}^T \left(\underline{C}_{K_T} \, \underline{C}_{K_T}^T\right)^{-1}$$

gebildet wird.

3. Verfahren nach Anspruch 1 oder 2, bei welchem die Matrix $C_{K_T}$ orthogonal oder quasi-orthogonal ist.

4. Verfahren nach einem der Ansprüche 1 bis 3, bei welchem bei der Aussendung ein Mehrträger-Verfahren angewandt wird.

**5.** Verfahren nach Anspruch 4, bei welchem das Mehrträger-Verfahren ein OFDM-Verfahren ist.

**6.** Verfahren nach einem der Ansprüche 1 bis 3, bei welchem bei der Aussendung ein Einträger-Verfahren angewandt wird.

**7.** Verfahren nach einem der Ansprüche 1 bis 6, bei welchem durch eine spektrale Codierung eines anfänglichen Bit-Datenstroms ein diskretes komplexwertiges Spektrum erhalten wird, und der Datenstrom komplexwertiger Datensymbole durch eine inverse diskrete Fourier-Transformation des komplexwertigen Spektrums erhalten wird.

**8.** Verfahren zum Empfangen von gemäß Anspruch 1 ausgesandten Kommunikationssignalen, bei welchem die Kommunikationssignale empfangen und Empfangsabtastwerte gebildet werden, und die Empfangsabtastwerte einer Raum-Zeit-Block-Decodierung zugeführt werden.

**9.** Verfahren nach Anspruch 8, bei welchem die Empfangsabtastwerte mit der Matrix $C_{K_T}$ multipliziert werden.

**10.** Verfahren nach Anspruch 9, bei welchem eine lineare Filterung mit einem Filter durchgeführt wird, dessen Filtereigenschaften oder Filterkoeffizienten aus der Matrix $C_{K_T}$ abgeleitet werden.

**11.** Computerprogrammprodukt umfassend Programm-Codeabschnitte zum Durchführen der Schritte eines der Ansprüche 1 bis 10.

**12.** Computerprogrammprodukt nach Anspruch 11, abgespeichert auf einem computerlesbaren Aufzeichnungsmedium.

**13.** Vorrichtung zur Aussendung von Kommunikationssignalen, mit:

einer Unterteilungseinheit (1) für die Unterteilung eines Datenstroms komplexwertiger Datensymbole in eine Anzahl $K_T > 2$ Teildatenströme von jeweils $n > 2$ Datensymbolen, einem Raum-Zeit-Block-Codierer (2) enthaltend einen Matrix-Bildner (2.1) für die Bildung einer $n \times K_T$-Matrix $C_{K_T}$ aus den Datensymbolen der Teildatenströme und eine Vorverzerrer-Einheit (2.2) für die Durchführung einer senderseitigen Vorverzerrung durch Bildung einer Matrix D aus der Matrix $C_{K_T}$, und $K_T$ Sendeantennen (3) für die Aussendung der Datensymbole entsprechend ihrer Anordnung in der Matrix D.

**14.** Vorrichtung nach Anspruch 13, bei welcher die Vorverzerrer-Einheit (2.2) ausgebildet ist, um die Matrix D gemäß

$$D \;=\; \left( \underline{C}_{K_T}^{T} \, \underline{C}_{K_T} \right)^{-1} \underline{C}_{K_T}^{T}$$

oder

$$D \;=\; \underline{C}_{K_T}^{T} \left( \underline{C}_{K_T} \, \underline{C}_{K_T}^{T} \right)^{-1}$$

zu bilden.

**15.** Vorrichtung nach Anspruch 13 oder 14, bei welcher der Matrix-Bildner (2.1) ausgebildet ist, um die Matrix $C_{K_T}$ als orthogonale oder quasi-orthogonale Matrix zu bilden.

**16.** Vorrichtung nach einem der Ansprüche 13 bis 15, ferner umfassend:

eine Fourier-Transformations-Einheit für die Erzeugung des Datenstroms komplexwertiger Datensymbole durch eine inverse diskrete Fourier-Transformation.

**17.** Vorrichtung zum Empfang von Kommunikationssignalen, welche von einer Vorrichtung gemäß einem der Ansprüche 13 bis 16 ausgesandt wurden, mit
$K_T$ Empfangsantennen (21),
einer Abtasteinrichtung (22) zur Erzeugung von Empfangsabtastwerten, und
einem Raum-Zeit-Block-Decodierer (23).

18. Vorrichtung nach Anspruch 17, bei welcher der Raum-Zeit-Block-Decodierer (23) ausgebildet ist, um die Empfangsabtastwerte mit der Matrix $C_{K_T}$ zu multiplizieren.

19. Vorrichtung nach Anspruch 18, bei welcher der Raum-Zeit-Block-Decodierer (23) ein Filter aufweist, dessen Filtereigenschaften oder Filterkoeffizienten aus der Matrix $C_{K_T}$ abgeleitet werden.

FIG 1

FIG 2

FIG 3

$$c_{K_T} = \begin{pmatrix} x_1 & x_2 & x_3 & x_4 \\ -x_2^* & x_1^* & -x_4^* & x_3^* \\ -x_3^* & -x_4^* & x_1^* & x_2^* \\ x_4 & -x_3 & -x_2 & x_1 \end{pmatrix}$$

EP 2 026 519 A1

**Europäisches Patentamt**

**EUROPÄISCHER RECHERCHENBERICHT**

Nummer der Anmeldung

EP 07 01 6196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ALEXIOU A ET AL: "Re-configurable linear precoders to compensate for antenna correlation in orthogonal and quasi-orthogonal space-time block coded systems" VEHICULAR TECHNOLOGY CONFERENCE, 17. Mai 2004 (2004-05-17), - 19. Mai 2004 (2004-05-19) Seiten 665-669, XP010765829 IEEE, PISCATAWAY, NJ, USA ISBN: 0-7803-8255-2 * Seite 665, Spalte 2, Absatz 2 * * Seite 667, Spalte 1 - Spalte 2 * ----- | 1,3,6, 8-13, 17-19 | INV. H04L25/03 H04L1/06 |
| X | EP 1 628 414 A (IOSPAN WIRELESS INC [US]) 22. Februar 2006 (2006-02-22) * Absatz [0045] * * Absatz [0053] - Absatz [0054] * * Absatz [0058] * * Absatz [0076] - Absatz [0077] * * Abbildungen 3,4 * ----- | 1,2,4,5, 7-15, 17-19 | |
| X | EP 1 605 653 A (DEUTSCH ZENTR LUFT & RAUMFAHRT [DE]) 14. Dezember 2005 (2005-12-14) * Absatz [0001] * * Absatz [0010] * * Absatz [0013] * * Absatz [0024] * * Absatz [0035] - Absatz [0036] * -----  -/-- | 1,11-13 | RECHERCHIERTE SACHGEBIETE (IPC) H04L |

Der vorliegende Recherchenbericht wurde für alle Patentansprüche erstellt

| Recherchenort | Abschlußdatum der Recherche | Prüfer |
|---|---|---|
| Den Haag | 18. April 2008 | Moreno, Marta |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

10

**Europäisches Patentamt**

**EUROPÄISCHER RECHERCHENBERICHT**

Nummer der Anmeldung

EP 07 01 6196

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | XU XIN ET AL: "Space Diversity Schemes for STBC-Based MIMO Systems and Pre-FDE SIMO Systems" PERSONAL, INDOOR AND MOBILE RADIO COMMUNICATIONS, 11. September 2005 (2005-09-11), - 14. September 2005 (2005-09-14) Seiten 1160-1164, XP010926354 IEEE, PISCATAWAY, NJ, USA ISBN: 978-3-8007-29 * Seite 1161, Spalte 2, Absatz 1 * * Seite 1163 * ----- | 1-19 | |
| A | SAMPATH H ET AL: "Pre-equalization for MIMO wireless channels with delay spread" VEHICULAR TECHNOLOGY CONFERENCE, Bd. 3, 24. September 2000 (2000-09-24), - 28. September 2000 (2000-09-28) Seiten 1175-1178, XP010524685 IEEE, PISCATAWAY, NJ, USA ISBN: 0-7803-6507-0 * Seite 1176, Spalte 2, letzter Absatz * * Abbildung 1 * ----- | 1,2,13, 14 | RECHERCHIERTE SACHGEBIETE (IPC) |
| A | JAFARKHANI H: "A quasi-orthogonal space-time block code" WIRELESS COMMUNICATIONS AND NETWORKING CONFERNCE, Bd. 1, 23. September 2000 (2000-09-23), Seiten 42-45, XP010532464 PISCATAWAY, NJ, USA,IEEE ISBN: 0-7803-6596-8 * Seite 43, Spalte 2, Absatz 3 * ----- | 1,3,13, 15 | |

Der vorliegende Recherchenbericht wurde für alle Patentansprüche erstellt

| Recherchenort | Abschlußdatum der Recherche | Prüfer |
|---|---|---|
| Den Haag | 18. April 2008 | Moreno, Marta |

EPO FORM 1503 03.82 (P04C03)

**EP 2 026 519 A1**

**ANHANG ZUM EUROPÄISCHEN RECHERCHENBERICHT**
**ÜBER DIE EUROPÄISCHE PATENTANMELDUNG NR.**

EP 07 01 6196

18-04-2008

| Im Recherchenbericht angeführtes Patentdokument | Datum der Veröffentlichung | Mitglied(er) der Patentfamilie | Datum der Veröffentlichung |
|---|---|---|---|
| EP 1628414 A | 22-02-2006 | KEINE | |
| EP 1605653 A | 14-12-2005 | DE 102004027719 A1 | 05-01-2006 |

EPO FORM P0461

# EP 2 026 519 A1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **S. M. ALAMOUTI.** A Simple Transmit Diversity Technique for Wireless Communications. *IEEE Journal on Selected Areas in Communication,* 1988, vol. 16 (8), 1451-1458